# EUROPÄISCHE PATENTSCHRIFT

(11) **EP 4 133 928 B1**
(45) Veröffentlichungstag und Bekanntmachung des Hinweises auf die Patenterteilung: **26.06.2024**
(21) Anmeldenummer: 22184671.0
(22) Anmeldetag: 13.07.2022
(51) Int. Cl.: A01B 76/00, A01B 69/00, A01B 63/111

(54) **VERFAHREN ZUR AUTOMATISIERUNG EINER LANDWIRTSCHAFTLICHEN ARBEITSAUFGABE**
METHOD FOR AUTOMATING AN AGRICULTURAL TASK
PROCÉDÉ D'AUTOMATISATION D'UNE TÂCHE DE TRAVAIL AGRICOLE

(30) Priorität: 12.08.2021 DE 102021121011; 06.10.2021 DE 102021125939
(43) Veröffentlichungstag der Anmeldung: 15.02.2023
(73) Patentinhaber: Deere & Company, Moline, IL 61265 (US)
(72) Erfinder: Schmidt, Martin, Mannheim (DE)
(74) Vertreter: Dehnhardt, Florian Christopher

(56) Entgegenhaltungen:
- WO-A1-2021/016065
- US-A1- 2019 392 573
- US-B2- 10 715 752

## Beschreibung

Die Erfindung betrifft ein Verfahren zur Automatisierung einer landwirtschaftlichen Arbeitsaufgabe mit den Merkmalen des Oberbegriffs des Anspruches 1.

Ein derartiges Verfahren ist aus US 2019/0392573 A1 bekannt. Dort sind ein landwirtschaftliches Arbeitsfahrzeug und ein Anbaugerät mit bildgebenden Mitteln zur Erfassung von Ernteresten auf dem Feld vor und nach einer Bodenbearbeitung durch das Anbaugerät entnehmbar. Anhand einer Auswertung von Bilddaten wird ein Ernterest-Parameterwert bestimmt, in dessen Abhängigkeit Arbeitsparameter (z.B. eine Bodeneindringtiefe) des Arbeitsgerätes modifiziert werden können, um einen gewünschten Grad einer Bedeckung der Feldoberfläche mit Ernteresten zu erreichen.

Der vorliegenden Erfindung liegt die Aufgabe zugrunde, ein gattungsgemäßes Verfahren hinsichtlich erzielbarer Bearbeitungseffizienz und Bearbeitungsqualität zu verbessern.

Diese Aufgabe wird durch ein Verfahren mit den Merkmalen des Patentanspruchs 1 gelöst.

Bei dem Verfahren zur Automatisierung einer landwirtschaftlichen Arbeitsaufgabe, die von einem Bodenbearbeitungsgerät an einem landwirtschaftlichen Traktor ausgeführt wird, wird mindestens eine Prozessführungsgröße zugrunde gelegt, welche einen Arbeits- und/oder Betriebsparameter (z.B. Arbeitstiefe, Bearbeitungsgeschwindigkeit) des Bodenbearbeitungsgerätes repräsentiert. Die mindestens eine Prozessführungsgröße wird von einer Kontrolleinheit (z.B. Bordcomputer des Traktors) durch Rückkopplungsdaten modifiziert, welche einen Feldzustand einer betrachteten Feldoberfläche vor und/oder nach der Bodenbearbeitung repräsentieren. Für die Ermittlung zumindest eines Teils oder der gesamten Rückkopplungsdaten werden zunächst durch Sensormittel Bodenbilder bzw. Bilddaten von der Feldoberfläche generiert. Diese Bodenbilder bzw. Bilddaten werden dann von einer Datenverarbeitungseinheit ausgewertet. Die Datenverarbeitungseinheit kann beispielsweise als eine separate physische Einheit ausgebildet sein oder Bestandteil der Kontrolleinheit sein. Die Datenverarbeitungseinheit wertet die Bodenbilder derart aus, dass die Bodenbilder in Abhängigkeit des Ergebnisses einer Überwachung der Feldoberfläche hinsichtlich eines optisch abdeckenden Luftstaubes zur Ermittlung der Rückkopplungsdaten verwendet werden.

Somit wird bei dem Verfahren die Einflussgröße "Luftstaub" berücksichtigt. Luftstaub entsteht insbesondere bei trockenen Feldoberflächen sowohl vor der Bodenbearbeitung (z.B. aufgrund von Windeinflüssen) als auch nach der Bodenbearbeitung (z.B. durch die Bearbeitung selbst, insbesondere auch in Verbindung mit Windeinflüssen) und kann die Bodenbilder bzw. die Bilddaten entsprechend beeinflussen. Durch Berücksichtigung des Luftstaubes können die Rückkopplungsdaten noch präziser ermittelt werden. Etwaige durch Luftstaub verursachte Einbußen bei der Bearbeitungseffizienz und -qualität des Verfahrens werden zuverlässig vermieden.

Mit den Rückkopplungsdaten kann kontinuierlich der jeweils aktuelle Feldzustand vor und/oder nach der Bodenbearbeitung berücksichtigt werden. Hierdurch hat das Verfahren einen iterativen und damit hinsichtlich der erzielbaren Bearbeitungseffizienz und -qualität einen selbstoptimierenden Charakter. Diese Selbstoptimierung wird durch die Berücksichtigung der Einflussgröße "Luftstaub" weiter verbessert.

Weitere vorteilhafte Ausgestaltungen des erfindungsgemäßen Verfahrens gehen aus den Unteransprüchen hervor.

Die von dem Überwachungsergebnis abhängige Verwendung der Bodenbilder bzw. Bilddaten zur Ermittlung der Rückkopplungsdaten bedeutet beispielsweise, dass Bodenbilder gar nicht zur Ermittlung von Rückkopplungsdaten verwendet werden, wenn Luftstaub erkannt oder detektiert wird. Für die Entscheidung, ob das Bodenbild verwendet wird, kann dieses im Rahmen einer Auswertung in der Datenverarbeitungseinheit zunächst binär vorklassifiziert werden (Staub; Nicht-Staub). Wenn das Überwachungsergebnis den Zustand "kein Luftstaub" repräsentiert, wird das Bodenbild als "Nicht-Staub" vorklassifiziert und zur Ermittlung von Rückkopplungsdaten verwendet.

Beispielsweise beinhaltet die Datenverarbeitungseinheit ein spezifisch eingelerntes Convolutional Neural Network, welches die binäre Vorklassifizierung anhand einer festgestellten optischen Staubdichte durchführt. In einer anderen Variante kann das Ergebnis einer Abstandsmessung zwischen Sensormitteln und der Feldoberfläche für die binäre Vorklassifizierung herangezogen werden.

In einer weiteren bevorzugten Ausführungsform wird das Bodenbild dann zur Ermittlung der Rückkopplungsdaten verwendet, wenn die Überwachung hinsichtlich des Luftstaubes zu dem Ergebnis führt, dass Luftstaub bis höchstens zu einem vorbestimmten Staub-Schwellenwert vorhanden ist. Mit anderen Worten repräsentiert das Überwachungsergebnis dann den Zustand "Luftstaub nicht mehr als der vorbestimmte Staub-Schwellenwert".

Bei der Auswertung der Bodenbilder erfolgt insbesondere eine Bildsegmentierung mit einer Zuordnung von Bildpixeln zu einzelnen bereitgestellten Zustandsklassen, welche unterschiedliche Feldzustände repräsentieren. Beispielsweise ist der zu überprüfende Feldzustand ein Bodenbedeckungsgrad. In diesem Fall repräsentieren einzelne bereitgestellte Zustandsklassen unterschiedliche Bodenbedeckungsgrade durch Pflanzen oder Pflanzenreste (z.B. 0%, 10%, 30%, 50%, 70%, 90%). Gegebenenfalls wird auch eine Zustandsklasse "Bodenbedeckung durch Bodenbearbeitungsgerät" bereitgestellt.

In einer weiteren bevorzugten Ausführungsform wird für die Entscheidung, ob das Bodenbild zur Ermittlung der Rückkopplungsdaten verwendet wird, auf die vorgenannte binäre Vorklassifizierung verzichtet. Stattdessen wird zur Detektion des Luftstaubes im Rahmen der Bildsegmentierung eine weitere Zustandsklasse, d.h. eine sogenannte Staubklasse für die Zuordnung des Luftstaubes, bereitgestellt. Hierdurch kann der technische Aufwand für die Ermittlung der Rückkopplungsdaten reduziert und entsprechend kostengünstiger gehalten werden. Beispielsweise erfolgt die Bildsegmentierung inklusive der Staubklasse und somit auch die Überwachung hinsichtlich Luftstaub unter Einsatz eines einzigen Bildverarbeitungssystems (z.B. eines Convolutional Neural Networks zur semantischen Segmentierung) .

Ausgehend von einer die Staubklasse enthaltenden Bildsegmentierung kann eine effiziente Bewertung des Bodenbildes bzw. der Bilddaten hinsichtlich der Einflussgröße "Luftstaub" durchgeführt werden, indem eine innerhalb des Bodenbildes festgestellte Häufigkeit oder Anzahl von der Staubklasse zugeordneten Bildpixeln mit dem vorbestimmten Staub-Schwellenwert verglichen wird. Wenn die Anzahl bzw. Häufigkeit der der Staubklasse zugeordneten Bildpixel innerhalb des Bodenbildes höchstens so groß ist wie der vorbestimmte Staub-Schwellenwert, dann wird das Bodenbild für die Ermittlung der Rückkopplungsdaten verwendet. Beispielsweise beträgt der Staub-Schwellenwert 70% der Gesamtanzahl aller Bildpixel des Bodenbildes. Wenn mehr als 70% der Bildpixel des Bodenbildes der Staubklasse zugeordnet werden, wird das Bodenbild nicht zur Ermittlung der Rückkopplungsdaten verwendet.

Vorzugsweise werden die Rückkopplungsdaten auf der Basis eines Zustands-Mittelwertes ermittelt. Dieser wird in Abhängigkeit von den innerhalb des Bodenbildes festgestellten Häufigkeiten oder Pixelanzahlen der zugeordneten Zustandsklassen gebildet. Dabei kann eine Wichtung einzelner Zustandsklassen erfolgen. Der Zustands-Mittelwert repräsentiert einen mittleren oder durchschnittlichen Feldzustand des ausgewerteten Bodenbildes und unterstützt eine quantitativ präzise Modifizierung der mindestens einen Prozessführungsgröße.

Eine präzise Modifizierung der mindestens einen Prozessführungsgröße wird weiter unterstützt, wenn der Zustands-Mittelwert unter Ausschluss der festgestellten Häufigkeit der Staubklasse gebildet wird.

Wie bereits erwähnt, werden die Bodenbilder durch geeignete Sensormittel generiert. Hierbei handelt es sich insbesondere um zurückschauende (z.B. am heckseitigen Bodenbearbeitungsgerät oder am rückwärtigen Bereich des Traktors angeordnete) Sensormittel zur Generierung von Bodenbildern nach der Bodenbearbeitung. Alternativ oder zusätzlich sind vorausschauende (z.B. am frontseitigen Bereich des Traktors angeordnete) Sensormittel vorhanden, welche Bodenbilder vor der Bodenbearbeitung generieren.

Die Überwachung hinsichtlich Luftstaub wird vorzugsweise durch geeignete Sensor- oder Detektionsmittel unterstützt. Eine Überwachung hinsichtlich Luftstaub erfolgt insbesondere durch relativ zur Fahrtrichtung des Traktors zurückschauende Sensormittel, d.h. insbesondere nach der Bodenbearbeitung. Zusätzlich kann durch vorausschauende Sensormittel eine Überwachung hinsichtlich Luftstaub in einem Bereich vor dem Traktor, also vor der Bodenbearbeitung, erfolgen.

Die Überwachung hinsichtlich Luftstaub erfolgt in einer bevorzugten Ausführungsform durch Auswertung von Bodenbildern bzw. Bilddaten und in einer weiteren Ausführungsform durch Auswertung von Abstandsmessungen zwischen geeigneten Sensormitteln (z.B. LiDAR, Stereokamera) und der Feldoberfläche.

Eine Verwendung des Verfahrens bietet sich insbesondere im Zusammenhang mit Bodenbearbeitungsgeräten zur Grundboden- oder Saatbettbearbeitung an, wie beispielsweise eines Grubbers, einer Kreiselegge, einer Scheibenegge oder eines Pflugs. Diese dienen vorzugsweise der Vorbereitung der Feldoberfläche für einen nachfolgenden Pflanz- oder Sävorgang.

Abhängig von der spezifischen Arbeitsaufgabe und/oder dem spezifischen Bodenbearbeitungsgerät können unterschiedliche Feldzustände für die Ermittlung der Rückkopplungsdaten relevant sein. Insbesondere handelt es sich bei dem betrachteten Feldzustand um einen Bodenbedeckungsgrad, d.h. um einen (z.B. prozentualen) Grad der Bedeckung des betrachteten Feldbodens durch beispielsweise Erntereste, Stroh, Unkraut. Mit Hilfe des erfindungsgemäßen Verfahrens lässt sich ein gewünschter Feldzustand bzw. Bodenbedeckungsgrad erreichen, um einen nachfolgenden Arbeitsvorgang (z.B. Pflanzen, Säen) optimal vorzubereiten.

Weitere Feldzustände sind beispielsweise der jeweilige Grad einer Krümelung des Feldbodens, einer Einebnung des Feldbodens oder einer Verdichtung des Feldbodens.

Wie bereits erwähnt, wird die automatisierte Durchführung des Verfahrens von der Kontrolleinheit unterstützt. Vorzugsweise ist dabei die Funktion der Kontrolleinheit derart, dass über ein Interfacemodul ein oder mehrere teilflächenspezifische Zielwerte und/oder Wichtungsfaktoren hinsichtlich prozessbezogener und/oder agronomischer Gütekriterien vorgegeben werden, nach deren Maßgabe die landwirtschaftliche Arbeitsaufgabe auszuführen ist. In einem Optimierungsmodul werden die Zielwerte und/oder Wichtungsfaktoren in die mindestens eine Prozessführungsgröße umgewandelt. Für die Modifizierung der mindestens einen Prozessführungsgröße gehen die Rückkopplungsdaten in das Optimierungsmodul ein. Zusätzlich ist es denkbar, dass nutzerseitig Randbedingungen für einen einzuhaltenden Wertebereich der mindestens einen Prozessführungsgröße vorgegeben werden. Einem Stabilisierungsmodul wird die mindestens eine modifizierte Prozessführungsgröße zugeführt, um eine Stell- und/oder Betriebseinrichtung des Bodenbearbeitungsgeräts und/oder des landwirtschaftlichen Traktors mittels des Stabilisierungsmoduls anzusteuern.

Die verschiedenen Module wirken nach Art eines kaskadierten Regelkreises zusammen. Die in das Optimierungsmodul eingehenden Rückkopplungsdaten unterstützen auf technisch einfache Weise den iterativen und somit selbstoptimierenden Charakter des Verfahrens. Die einzelnen Module können in der Kontrolleinheit funktionsmäßig als entsprechende Software hinterlegt sein.

Wie bereits erwähnt, wird die mindestens eine Prozessführungsgröße durch die Rückkopplungsdaten modifiziert. Einzelne Prozessführungsgrößen können hierbei auf unterschiedliche Weise modifiziert werden.

In einer bevorzugten Ausführungsform werden zur Modifizierung der Prozessführungsgröße Rückkopplungsdaten eines Feldzustands vor der Bodenbearbeitung im Optimierungsmodul mittels einer auf einem Kennfeld basierenden Vorsteuerung zu einer Voraus-Komponente der Prozessführungsgröße verarbeitet. Das Kennfeld kann vorgegeben werden (z.B. vom Hersteller des Traktors und/oder des Bodenbearbeitungsgerätes). Das Kennfeld kann aber auch aktualisiert werden, z.B. vom Hersteller oder durch feldspezifisches Dazulernen.

In einer weiteren bevorzugten Ausführungsform werden zur Modifizierung der Prozessführungsgröße Rückkopplungsdaten eines Feldzustands nach der Bodenbearbeitung im Optimierungsmodul mittels eines Reglers (z.B. PI-Regler) zu einer Rück-Komponente der Prozessführungsgröße verarbeitet.

Eine Gesamtkomponente der Prozessführungsgröße wird dann im Optimierungsmodul insbesondere zumindest aus der Voraus-Komponente gebildet. Falls im Sinne einer noch präziseren Verfahrensdurchführung Rückkopplungsdaten für den Feldzustand vor und nach der Bodenbearbeitung vorhanden sind, wird die Gesamtkomponente der Prozessführungsgröße in Abhängigkeit von einer Verknüpfung der Voraus-Komponente mit der Rück-Komponente gebildet. Die Gesamtkomponente wird noch mit den nutzerseitig vorgegebenen Randbedingungen verglichen. Diese Randbedingungen sind z.B. durch eine minimale und/oder maximale Arbeitstiefe des Bodenbearbeitungsgerätes oder eine minimale und/oder maximale Bearbeitungsgeschwindigkeit gegeben. Dabei ist die Bearbeitungsgeschwindigkeit üblicherweise identisch mit der Fahrgeschwindigkeit des Traktors. Nach dem vorgenannten Vergleich wird die modifizierte Prozessführungsgröße an das Stabilisierungsmodul gesendet.

Vorzugsweise wird in Abhängigkeit von dem vorgenannten Vergleich bzw. dessen Vergleichsergebnis eine weitere Prozessführungsgröße modifiziert. Diese Modifizierung ist mathematischphysikalisch auf eine für die Verfahrensdurchführung geeignete Weise und vorzugsweise auf eine im Vergleich zu den vorgenannten Modifizierungsschritten unterschiedliche Weise ausgestaltet.

Beispielsweise wird die Gesamtkomponente einer ersten Prozessführungsgröße "Soll-Arbeitstiefe" des Bodenbearbeitungsgerätes mit einer vom Nutzer vorgegebenen minimalen und maximalen Arbeitstiefe verglichen. Wenn der Wert der Gesamtkomponente größer ist als der Wert der vorgegebenen maximalen Arbeitstiefe, wird vorzugsweise die vorgegebene maximale Arbeitstiefe als (modifizierte) Prozessführungsgröße definiert. Dieser dann nicht optimale Wert der Soll-Arbeitstiefe wird zumindest teilweise kompensiert, indem eine weitere Prozessführungsgröße (z.B. die Bearbeitungsgeschwindigkeit des Bodenbearbeitungsgerätes bzw. die Fahrgeschwindigkeit des Traktors) nach einem definierten System oder Schema verändert und somit modifiziert wird. Zusammengefasst können die Rücckopplungsdaten die Modifizierung einer Prozessführungsgröße bewirken und unter bestimmten Bedingungen indirekt auch zu einer Modifizierung einer weiteren Prozessführungsgröße führen. Hierdurch wird die Effizienz und Qualität bei der Automatisierung der Arbeitsaufgabe weiter unterstützt.

Um bei Staubverhältnissen das Fehlerpotential der Automatisierung möglichst gering zu halten, wird in einer bevorzugten Ausführung von der Datenverarbeitungseinheit in Abhängigkeit des Überwachungsergebnisses hinsichtlich des Luftstaubes ein Einfriersignal generiert, welches an das Optimierungsmodul gesendet wird. Dort dient das Einfriersignal zur Deaktivierung der Vorsteuerung (Voraus-Komponente der Prozessführungsgröße) und/oder des Reglers (Rück-Komponente der Prozessführungsgröße), je nachdem, ob das Überwachungsergebnis die Feldoberfläche vor der Bodenbearbeitung und/oder die Feldoberfläche nach der Bodenbearbeitung betrifft. Hierdurch wird ermöglicht, dass bei einem Überwachungsergebnis "Luftstaub vorhanden" oder "Luftstaub oberhalb des vorbestimmten Staub-Schwellenwertes" das Einfriersignal gesendet wird und durch die Deaktivierung der Vorsteuerung und/oder des Reglers die Voraus-Komponente und/oder die Rück-Komponente nicht weiter verändert wird. Die jeweilige Komponente bleibt dann konstant, bis die Vorsteuerung und/oder der Regler wieder aktiviert wird, z.B. indem das Einfriersignal nicht mehr gesendet wird. Somit werden staubbedingte Fehler bei der Modifizierung der Prozessführungsgrößen vermieden.

Das Einfriersignal wird vorzugsweise dann nicht mehr gesendet, wenn das Überwachungsergebnis hinsichtlich des Luftstaubes den Zustand "kein Luftstaub" oder den Zustand "Luftstaub bis höchstens dem vorbestimmten Staub-Schwellenwert" repräsentiert.

Einfriersignale zur zeitweiligen Deaktivierung der Vorsteuerung und/oder des Reglers im Optimierungsmodul können bei bestimmten Vorgaben auch von der Kontrolleinheit gesendet werden. Diese Vorgaben sind beispielsweise die Auswahl bzw. Festlegung eines spezifischen Biomassemodells (z.B. Weizen, Mais, etc.) oder eine Entscheidung durch den Nutzer.

Unabhängig von der Ausgestaltung des Optimierungsmoduls kann dieses mehrere Regelungsmodi (z.B. dynamisch, mittel, träge) aufweisen für eine unterschiedlich schnelle Regelung der Prozessführungsgröße(n) bzw. der Ausgangsgröße(n) des Optimierungsmoduls. Der jeweils gültige Regelungsmodus kann im Interfacemodul abhängig von einer Auswahl des Nutzers vorgegeben werden.

Das erfindungsgemäße Verfahren wird im Folgenden anhand der beigefügten Zeichnungen näher erläutert. Dabei sind hinsichtlich ihrer Funktion übereinstimmende bzw. vergleichbare Komponenten mit denselben Bezugszeichen gekennzeichnet. Es zeigen:
- Fig. 1: ein Ausführungsbeispiel einer Vorrichtung zur Durchführung des erfindungsgemäßen Verfahrens zur Automatisierung einer landwirtschaftlichen Arbeitsaufgabe,
- Fig. 2: ein als Flussdiagramm dargestelltes Ausführungsbeispiel des erfindungsgemäßen Verfahrens zur Automatisierung einer landwirtschaftlichen Arbeitsaufgabe,
- Fig. 3: ein Flussdiagramm mit Ausführungsbeispielen zur Ermittlung von Rückkopplungsdaten, und
- Fig. 4: eine Detailansicht eines Ausführungsbeispiels des Optimierungsmoduls.

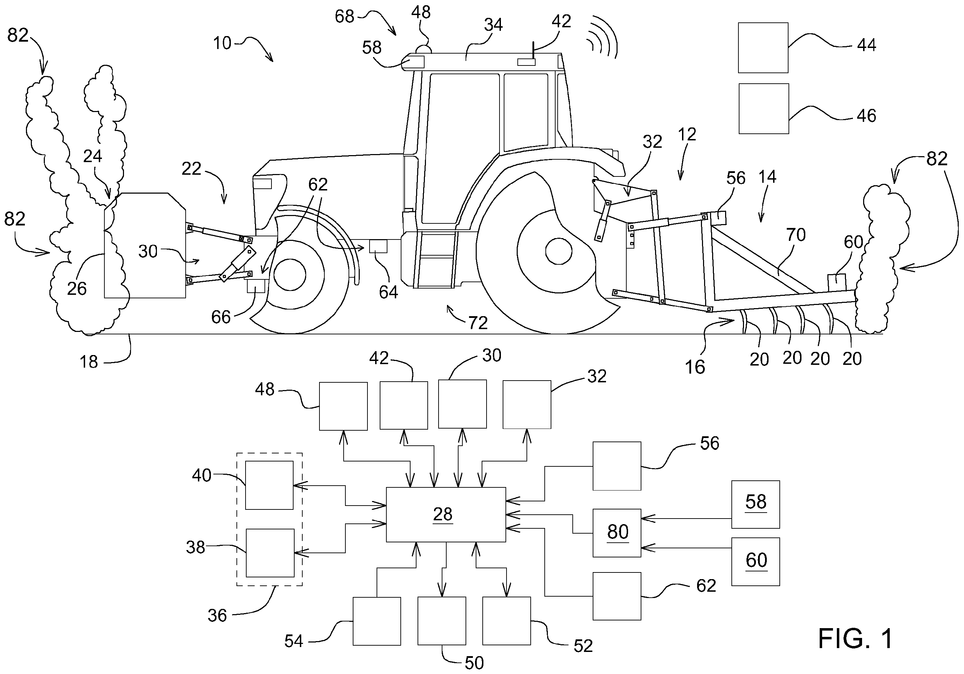

Fig. 1 zeigt eine von einem landwirtschaftlichen Fahrzeug umfasste Vorrichtung zur Durchführung des erfindungsgemäßen Verfahrens zur Automatisierung einer landwirtschaftlichen Arbeitsaufgabe.

Bei dem landwirtschaftlichen Fahrzeug handelt es sich beispielsgemäß um einen landwirtschaftlichen Traktor 10 mit einem heckseitigen Dreipunkt-Kraftheber 12, an dem ein Bodenbearbeitungsgerät 14 zur Grundboden- oder Saatbettbearbeitung, hier in Gestalt eines Grubbers 16 mit einer Vielzahl von in einen Ackerboden bzw. eine Feldoberfläche 18 eingreifenden Zinken 20, angebracht ist. Der Grubber 16 dient einerseits der Lockerung und Krümelung des Ackerbodens sowie andererseits der Einarbeitung von humosem Material, das auf der Feldoberfläche 18 aufliegt. Das humose Material ist typischerweise durch Pflanzenreste eines abgeernteten Getreide- oder Maisfelds gebildet. Für den Fall des in Fig. 1 abgebildeten Getreidefelds handelt es sich dementsprechend um auf der Feldoberfläche 18 liegendes Stroh. Alternativ kann der Grubber 16 jedoch auch zur Bearbeitung eines abgeernteten Mais- oder Sojafelds dienen.

In einer optionalen Ausführungsform ist des Weiteren ein frontseitiger Dreipunkt-Kraftheber 22 vorgesehen, an dem ein zusätzliches Bodenbearbeitungsgerät 24 in Gestalt eines Mulchers 26 angebracht ist, mittels dessen sich die auf der Feldoberfläche 18 verteilt liegenden Pflanzenreste bei Bedarf vorzerkleinern lassen, um einen verbesserten Durchsatz (Materialfluss) am Grubber 16 sicherzustellen.

Beide Dreipunkt-Kraftheber 12, 22 lassen sich seitens einer Kontrolleinheit 28 durch Ansteuerung eines jeweils zugehörigen hydraulischen Hubwerks 30, 32 in ihrer Hublage verändern.

Die Kontrolleinheit 28, bei der es sich letztlich um einen Bordcomputer handelt, steht ferner mit einer in einer Fahrerkabine 34 des landwirtschaftlichen Traktors 10 untergebrachten Nutzerschnittstelle 36, die ein Bedienfeld 38 und eine Anzeigeeinheit 40 umfasst, einer Datenschnittstelle 42 zur Herstellung einer drahtlosen Datenaustauschverbindung mit einem zentralen Farmmanagementsystem 44 bzw. einer Datencloud 46, einem GPS-Empfänger 48 zur Positionsbestimmung, einer Motorsteuerung 50, einer Speichereinheit 52, einem CAN- bzw. ISOBUS 54, sowie kamerabasierten Detektormitteln 56 in Verbindung.

Daneben erhält die Kontrolleinheit 28 Informationen von einer Datenverarbeitungseinheit 80, welche zumindest die Daten bildgebender Sensormittel 58, 60 verarbeitet. Die Sensormittel 58, 60 bewirken eine optische Erfassung der Feldoberfläche 18 vor dem landwirtschaftlichen Traktor 10 (vorausschauende Sensormittel 58) bzw. hinter dem Bodenbearbeitungsgerät 14 (zurückschauende Sensormittel 60). Bei den bildgebenden Sensormitteln 58, 60 handelt es sich um eine oder mehrere Mono- und/oder Stereo-Kameras, die im sichtbaren oder IR-Wellenlängenbereich arbeiten. Zur Verbesserung der Datenqualität ist vorzugsweise eine Kombination mit weiteren Sensormitteln 62, vorliegend einem Bodenradar (Ground Penetrating Radar) 64 und/oder einem LiDAR 66 vorgesehen. Die Signale bzw. Daten der Sensormittel 62 können zumindest teilweise optional in der Datenverarbeitungseinheit 80 verarbeitet und von dort in verarbeiteter Form an die Kontrolleinheit 28 gesendet werden.

Die vorausschauenden Sensormittel 58 sind im Dachbereich 68 der Fahrerkabine 34 des landwirtschaftlichen Traktors 10 angebracht. Die zurückschauenden Sensormittel 60 hingegen sind dem Bodenbearbeitungsgerät 14 zugeordnet und dort an einer tragenden Gerätestruktur 70 rückwärtig befestigt. Abweichend davon ist auch eine rückwärtige Anbringung am Dachbereich 68 des Traktors 10 möglich. Bodenradar 64 und/oder LiDAR 66 befinden sich im Bereich einer Unterseite 72 des landwirtschaftlichen Traktors 10 (oder auch der tragenden Gerätestruktur 70 des Bodenbearbeitungsgerät 14) und sind auf die darunter liegende Feldoberfläche 18 gerichtet.

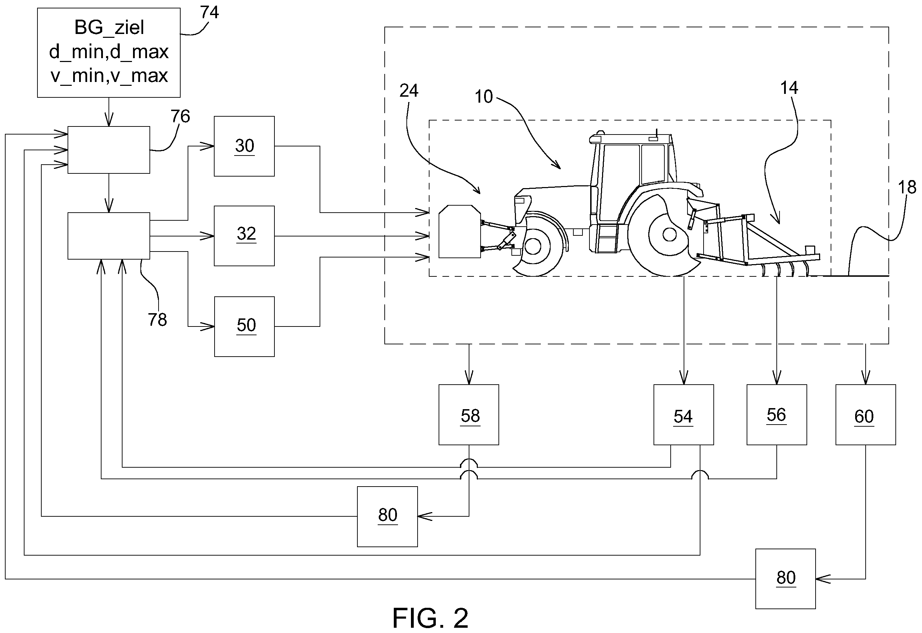

Fig. 2 zeigt ein als Flussdiagramm dargestelltes Ausführungsbeispiel des erfindungsgemäßen Verfahrens zur Automatisierung einer landwirtschaftlichen Arbeitsaufgabe.

Das Verfahren lässt sich grob in drei Module unterteilen, die einen kaskadierten Regelkreis bilden und in der Kontrolleinheit 28 funktionsmäßig als entsprechende Software hinterlegt sind. Im Einzelnen handelt es sich um ein Interfacemodul 74, ein Optimierungsmodul 76 und ein Stabilisierungsmodul 78. Deren Funktion soll nachfolgend im Detail dargelegt werden.

### Interfacemodul

Zunächst werden von der Kontrolleinheit 28 über das Interfacemodul 74 ein oder mehrere teilflächenspezifische Zielwerte und/oder Wichtungsfaktoren hinsichtlich prozessbezogener und/oder agronomischer Gütekriterien vorgegeben, nach deren Maßgabe die Arbeitsaufgabe mittels des Bodenbearbeitungsgeräts 14 auszuführen ist.

Die Vorgabe der teilflächenspezifischen Zielwerte und/oder Wichtungsfaktoren erfolgt hierbei im Rahmen einer Arbeitsvorbereitung bzw. -planung. Die teilflächenspezifischen Zielwerte und/oder Wichtungsfaktoren werden anschließend in die der Kontrolleinheit 28 zugeordnete Speichereinheit 52 bzw. in die Datencloud 46 hochgeladen, sodass diese von dort beim Durchlaufen des Regelkreises vom Interfacemodul 74 abrufbar sind.

Die Durchführung der Arbeitsvorbereitung bzw. -planung erfolgt seitens eines Bedieners über das Bedienfeld 38 der Nutzerschnittstelle 36 bzw. über das zentrale Farmmanagementsystem 44, das insbesondere Zugriff auf eine agronomische Datenbank hat, die unter anderem Informationen hinsichtlich Verlauf, Höhenprofil und Abmessungen der zu bearbeitenden Feldoberfläche 18, Bodeneigenschaften, zurückliegender Bewirtschaftungshistorie, zukünftiger Bewirtschaftungsplanung einschließlich nachfolgend geplanter Bearbeitungsschritte, technischer Spezifikationen des eingesetzten Bodenbearbeitungsgeräts 14 sowie zeitaktueller Angaben äußerer Einflussfaktoren wie der (zurückliegenden, aktuellen oder voraussichtlich zu erwartenden) Wetterverhältnisse und dergleichen enthält. Im Falle kartografisch verorteter Informationen werden diese von der Kontrolleinheit 28 mit seitens des GPS-Empfängers 48 bereitgestellten Positionsdaten in Beziehung gesetzt.

Als agronomischer Zielwert ist im Interfacemodul 74 vorzugsweise ein vom Nutzer gewünschter Feldzustand, insbesondere ein gewünschter Bodenbedeckungsgrad BG_ziel nach der Bodenbearbeitung, vorgegeben. Weiterhin gibt der Nutzer im Rahmen der Arbeitsvorbereitung und -planung Randbedingungen hinsichtlich einer minimalen Arbeitstiefe d_min und/oder eine maximale Arbeitstiefe d_max des Bodenbearbeitungsgerätes 14 sowie eine minimale Fahrgeschwindigkeit v_min und/oder eine maximale Fahrgeschwindigkeit v_max des Traktors 10 vor. Zusätzlich erfolgt die Vorgabe einer Soll-Fahrgeschwindigkeit v_soll_vorgabe bzw. einer Soll-Bearbeitungsgeschwindigkeit ẋ_soll_vorgabe.

### Optimierungsmodul

Im Optimierungsmodul 76 werden von der Kontrolleinheit 28 die im Interfacemodul 74 vorgegebenen Zielwerte und/oder Wichtungsfaktoren unter Berücksichtigung der vorgegebenen Randbedingungen in Arbeits- und/oder Betriebsparameter des Bodenbearbeitungsgeräts 14 repräsentierende Prozessführungsgrößen umgewandelt.

Die Beurteilung des durch die Rückkopplungsdaten repräsentierten Zustands der Feldoberfläche 18 vor bzw. nach der Bearbeitung mittels des Bodenbearbeitungsgeräts 14 erfolgt hierbei unter Nutzung der bildgebenden Sensormittel 58, 60.

Die mittels der vorausschauenden Sensormittel 58 ermittelbaren Rückkopplungsdaten für eine Modifizierung der Prozessführungsgröße(n) betreffen für den Fall eines abgeernteten Getreide-, Mais- oder Sojafelds beispielsweise Zustandsparameter wie den Grad einer Bodenbedeckung BG_ist-vor (insbesondere durch Pflanzen bzw. Pflanzenreste, wie Stroh, Gras, Unkraut), die Stoppeldichte (also die Anzahl der Stoppeln pro Flächeneinheit), die Höhe bzw. Länge der Stoppeln und/oder der Strohreste, den Grad einer Bodenverdichtung und den Verlauf der Stoppelreihen in Bezug auf die Bearbeitungsrichtung. Zusätzlich ist auch der Zustand der Stoppeln von Belang. Vor allem dann, wenn diese während des Erntevorgangs aufgespleisst bzw. plattgefahren worden sind.

Die mittels der zurückschauenden Sensormittel 60 ermittelbaren Rückkopplungsdaten für eine Modifizierung der Prozessführungsgröße(n) beziehen sich für den Fall eines abgeernteten Getreide-, Mais- oder Sojafelds beispielsweise auf Zustandsparameter wie einen Einarbeitungsgrad der Erntereste bzw. einen verbliebenen Grad der Bodenbedeckung BG_ist-rück, die Krümelung der Feldoberfläche 18, den Tiefenlockerungsgrad oder den Einarbeitungsgrad von Unkraut. Zusätzlich kommen neben dem Einarbeitungsgrad der Stoppeln bzw. dem verbliebenen Bodenbedeckungsgrad vorzugsweise Zustandsparameter wie der Zerkleinerungsgrad der Stoppeln hinzu.

Des Weiteren ist in einer optionalen Ausführungsform eine Modifikation der Prozessführungsgröße(n) in Abhängigkeit eines Betriebszustands des Bodenbearbeitungsgeräts 14 und/oder des landwirtschaftlichen Traktors 10 möglich. Dieser leitet sich beispielsweise aus Informationen eines aktuellen Treibstoffverbrauchs des landwirtschaftlichen Traktors 10 und einer sich aus dessen Fahrgeschwindigkeit v_ist ergebenden aktuellen Bearbeitungsgeschwindigkeit ẋ_ist ab. Die betreffenden Informationen stehen der Kontrolleinheit 28 vorzugsweise am CAN- bzw. ISOBUS 54 des landwirtschaftlichen Traktors 10 zur Verfügung.

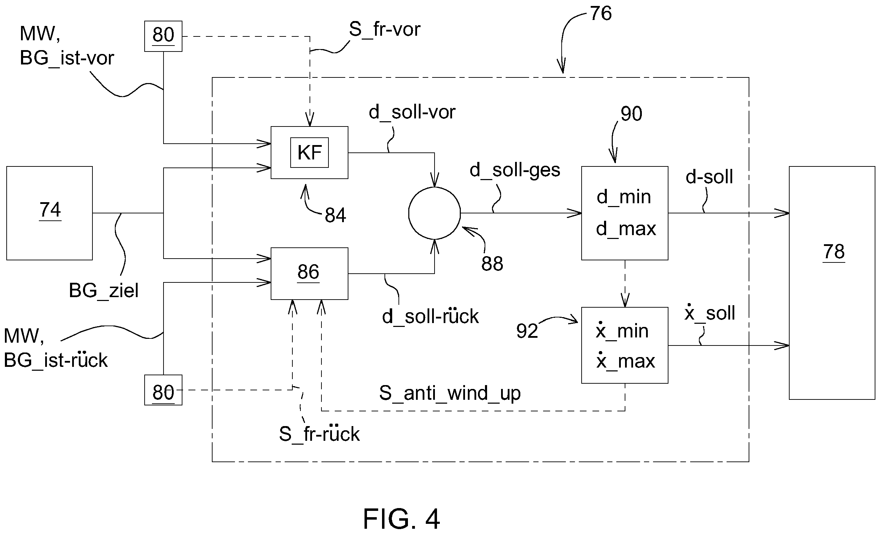

Weitere Einzelheiten einer Ausführungsform des Optimierungsmoduls 76 werden anhand von Fig. 4 erläutert.

### Stabilisierungsmodul

Dem Stabilisierungsmodul 78 werden die zuvor gegebenenfalls modifizierten Prozessführungsgrößen d_soll, x_soll zur Ansteuerung von Stell- und/oder Betriebseinrichtungen des Bodenbearbeitungsgeräts 14 und/oder des landwirtschaftlichen Traktors 10 zugeführt. Die Stell- und/oder Betriebseinrichtungen sind vorliegend durch das Hubwerk 32 (betreffend d_soll) sowie die Motorsteuerung 50 (betreffend ẋ_soll) gebildet.

Optional kann das Stabilisierungsmodul 78 auch das Hubwerk 30 des zusätzlichen Bodenbearbeitungsgeräts 24 ansteuern, wenn dies für spezifische Zwecke sinnvoll ist.

In das Stabilisierungsmodul 78 gehen in einer optionalen Ausführungsform auch Informationen hinsichtlich eines aktuellen Funktionsstatus des Bodenbearbeitungsgeräts 14 ein. Der aktuelle Funktionsstatus wird mittels der kamerabasierten Detektormittel 56 am Bodenbearbeitungsgerät 14 bzw. dessen tragender Gerätestruktur 70 überwacht, wobei diese auf Grundlage einer entsprechenden Bildverarbeitung bzw. -analyse erkennen, ob sich Erntereste in den Werkzeugen des Bodenbearbeitungsgeräts 14 (hier den Zinken 20 des Grubbers 16) angesammelt haben und zu möglichen Störungen des Bearbeitungsvorgangs führen können. Bei der Bewertung des aktuellen Funktionsstatus ist eine Berücksichtigung des aktuellen Materialflusses, also des Durchsatzes von Ernteresten und Ackererde pro Zeiteinheit möglich.

### Ermittlung der Rückkopplungsdaten

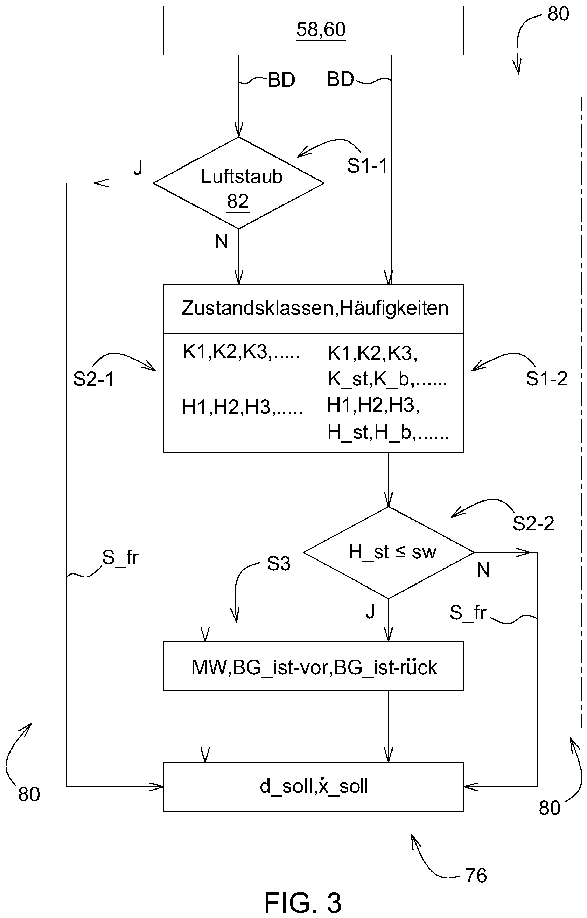

Fig. 3 zeigt ein Flussdiagramm mit zwei Ausführungsbeispielen zur Ermittlung der Rückkopplungsdaten. Dabei werden von den Sensormitteln 58, 60 in vorgegebenen Zeitintervallen (z.B. immer nach 20 Millisekunden) jeweils ein neues Bodenbild bzw. entsprechende Bilddaten BD generiert. Diese Bilddaten BD werden an die Datenverarbeitungseinheit 80 gesendet und dort ausgewertet. Letztere kann beispielsweise als eine separate Einheit oder als ein Bestandteil der Kontrolleinheit 28 ausgebildet sein.

Grundsätzlich werden die Bodenbilder bzw. Bilddaten BD in der Datenverarbeitungseinheit 80 derart ausgewertet, dass sie nur dann zur Ermittlung der Rückkopplungsdaten verwendet werden, wenn eine Überwachung der Feldoberfläche 18 hinsichtlich eines optisch abdeckenden Luftstaubes 82 zu dem Ergebnis führt, dass - je nach Ausführungsvariante - entweder kein Luftstaub 82 ermittelt bzw. detektiert wird oder Luftstaub 82 bis höchstens zu einem vorbestimmten Staub-Schwellenwert SW ermittelt bzw. detektiert wird.

Bei einer ersten Variante wird in einem Verfahrensschritt S1-1 eine binäre Vorklassifizierung durchgeführt. Falls das Überwachungsergebnis den Zustand "Luftstaub" repräsentiert, wird von der Datenverarbeitungseinheit 80 ein Einfriersignal S_fr an das Optimierungsmodul 76 gesendet, dessen technische Wirkung anhand von Fig. 4 näher erläutert wird. Falls im Schritt S1-1 das Überwachungsergebnis den Zustand "kein Luftstaub" repräsentiert, werden die Bilddaten in einem Schritt S2-1 ausgewertet.

Im Schritt S2-1 erfolgt eine Bildsegmentierung mit einer Zuordnung jedes Bildpixels des Bodenbildes bzw. der Bilddaten BD zu einer von mehreren bereitgestellten Zustandsklassen K1, K2, K3 usw., welche unterschiedliche Feldzustände repräsentieren.

Im Falle eines Bodenbedeckungsgrades BG als zu überprüfender Feldzustand entsprechen die bereitgestellten Zustandsklassen vorzugsweise vorbestimmten unterschiedlichen prozentualen Bodenbedeckungsgraden BG, beispielsweise K1 (0% BG), K2 (10% BG), K3 (30% BG) usw. Außerdem kann eine Zustandsklasse K_b vorgesehen sein, welche eine Abdeckung des Feldbodens 18 durch einen Teil des Bodenbearbeitungsgerätes 14, z.B. durch die Zinken 20, repräsentiert.

Im Schritt S2-1 werden außerdem aufgrund der Bildsegmentierung Häufigkeiten H1, H2, H3 der zugeordneten Zustandsklassen K1, K2, K3 innerhalb des ausgewerteten Bodenbildes bzw. der entsprechenden Bilddaten BD festgestellt.

In Abhängigkeit von den festgestellten Häufigkeiten H1, H2, H3 wird ein Zustands-Mittelwert MW gebildet (Schritt S3). Der Zustands-Mittelwert MW repräsentiert den aktuellen Bedeckungsgrad BG_ist-vor bezüglich der vorausschauenden Sensormittel 58 oder den aktuellen Bedeckungsgrad BG_ist-rück bezüglich der zurückschauenden Sensormittel 60.

Bei einer zweiten Variante erfolgt in einem Verfahrensschritt S1-2 eine Bildsegmentierung mit einer Zuordnung jedes Bildpixels des Bodenbildes bzw. der Bilddaten BD zu einer von mehreren bereitgestellten Zustandsklassen K1, K2, K3, K_b usw., welche unterschiedliche Feldzustände repräsentieren.

Im Falle eines Bodenbedeckungsgrades BG als zu überprüfender Feldzustand entsprechen die bereitgestellten Zustandsklassen vorzugsweise vorbestimmten unterschiedlichen prozentualen Bodenbedeckungsgraden BG, beispielsweise K1 (0% BG), K2 (10% BG), K3 (30% BG) usw. Außerdem kann die bereits erläuterte Zustandsklasse K_b vorgesehen sein.

Zusätzlich ist bei der zweiten Variante eine als eine Staubklasse K_st wirksame Zustandsklasse für die Zuordnung des Luftstaubes 82 bereitgestellt. Mit dieser Staubklasse K_st kann die Feldoberfläche 18 hinsichtlich des Luftstaubes 82 überwacht werden.

Im Schritt S1-2 werden außerdem aufgrund der Bildsegmentierung Häufigkeiten H1, H2, H3, H_b der zugeordneten Zustandsklassen K1, K2, K3, K_b innerhalb des ausgewerteten Bodenbildes bzw. der entsprechenden Bilddaten BD festgestellt. Bezüglich der Staubklasse K_st wird eine Häufigkeit H_st festgestellt.

In einem Schritt S2-2 wird die festgestellte Häufigkeit H_st der der Staubklasse K_st zugeordneten Bildpixel mit dem vorbestimmten Staub-Schwellenwert SW verglichen. Falls die Häufigkeit H_st größer ist als der Staub-Schwellenwert SW, wird von der Datenverarbeitungseinheit 80 ein Einfriersignal S_fr an das Optimierungsmodul 76 gesendet, dessen technische Wirkung anhand von Fig. 4 näher erläutert wird. Falls im Schritt S2-2 die Häufigkeit H_st höchstens so groß ist wie der Staub-Schwellenwert SW, wird eine weitere Auswertung des Bodenbildes bzw. der Bilddaten BD zur Ermittlung der Rückkopplungsdaten durchgeführt. Dabei wird in Abhängigkeit von den festgestellten Häufigkeiten H1, H2, H3 usw. unter Ausschluss der festgestellten Häufigkeit H_st der Staubklasse K_st und der Häufigkeit H_b der Zustandsklasse K_b ein Zustands-Mittelwert MW gebildet (Schritt S3). Der Zustands-Mittelwert MW repräsentiert wiederum den aktuellen Bedeckungsgrad BG_ist-vor bezüglich der vorausschauenden Sensormittel 58 oder den aktuellen Bedeckungsgrad BG_ist-rück bezüglich der zurückschauenden Sensormittel 60.

Bei beiden Varianten entsprechen die Rückkopplungsdaten dem Zustands-Mittelwert MW oder werden zumindest auf Basis des Zustands-Mittelwertes MW ermittelt. Die Rückkopplungsdaten werden von der Datenverarbeitungseinheit 80 an das Optimierungsmodul 76 gesendet.

Fig. 4 zeigt die Funktionsweise des Optimierungsmoduls 76 in einer bevorzugten Ausführungsform. Das Optimierungsmodul 76 weist eine Vorsteuerung 84 mit einem Kennfeld KF und einen Regler 86 (z.B. PI-Regler) auf. Das Kennfeld KF kann beispielsweise herstellerseitig oder durch feldspezifisches Dazulernen ausgetauscht bzw. aktualisiert werden.

Die Vorsteuerung 84 erhält Signale von dem Interfacemodul 74 (vom Nutzer gewünschter Bodenbedeckungsgrad BG_ziel) und von der Datenverarbeitungseinheit 80 (Rückkopplungsdaten, Zustands-Mittelwert MW, aktueller Bodenbedeckungsgrad BG_ist-vor bezüglich der vorausschauenden Sensormittel 58). Mit Hilfe des Kennfeldes KF werden die Rückkopplungsdaten zu einer Voraus-Komponente d_soll-vor der Prozessführungsgröße (hier eine Soll-Arbeitstiefe d_soll) verarbeitet.

Der Regler 86 erhält Signale von dem Interfacemodul 74 (vom Nutzer gewünschter Bodenbedeckungsgrad BG_ziel) und von der Datenverarbeitungseinheit 80 (Rückkopplungsdaten, Zustands-Mittelwert MW, aktueller Bodenbedeckungsgrad BG_ist-rück bezüglich der zurückschauenden Sensormittel 60). Der Regler 86 verarbeitet die Rückkopplungsdaten zu einer Rück-Komponente d_soll-rück der Prozessführungsgröße d_soll.

Aus den beiden Komponenten d_soll-vor, d_soll-rück wird mittels eines Verknüpfungselementes 88 (z.B. Addierer) eine Gesamtkomponente d_soll-ges der Prozessführungsgröße d_soll gebildet. In einer nachfolgenden Vergleichsstufe 90 wird die Gesamtkomponente d_soll-ges mit den Randbedingungen d_min, d_max des Interfacemoduls 74 verglichen. Aus dem Vergleichsergebnis ergibt sich die modifizierte Prozessführungsgröße d_soll.

Außerdem kann abhängig von dem vorgenannten Vergleichsergebnis in einer Änderungsstufe 92 die weitere Prozessführungsgröße in Form einer Soll-Fahrgeschwindigkeit v_soll des Traktors 10 bzw. in Form einer Soll-Bearbeitungsgeschwindigkeit ẋ_soll des Bodenbearbeitungsgerätes 14 modifiziert werden. Hierdurch können für die Bearbeitungseffizienz und -qualität eher ungünstige Werte der Prozessführungsgröße d_soll durch eine Modifizierung der weiteren Prozessführungsgröße zumindest teilweise kompensiert werden.

Beispielsweise wird die nutzerseitig vorgegebene Soll-Fahrgeschwindigkeit v_soll_vorgabe bzw. Soll-Bearbeitungsgeschwindigkeit x_soll_vorgabe in der Änderungsstufe 92 nach einem definierten System erhöht, wenn die Gesamtkomponente d_soll-ges größer ist als die vom Nutzer vorgegebene maximale Arbeitstiefe d_max und deshalb die Prozessführungsgröße d_soll auf die maximale Arbeitstiefe d_max begrenzt wird. Die sich so ergebende modifizierte Soll-Fahrgeschwindigkeit v_soll des Traktors 10 bzw. Soll-Bearbeitungsgeschwindigkeit x_soll des Bodenbearbeitungsgerätes 14 unterliegt ebenfalls einem Vergleich mit den Randbedingungen v_min und v_max bzw. x_min und x_max. Sofern die Soll-Fahrgeschwindigkeit v_soll des Traktors 10 bzw. Soll-Bearbeitungsgeschwindigkeit x_soll des Bodenbearbeitungsgerätes 14 größer bzw. kleiner ist als die vorgegebenen Randbedingungen v_max und v_min bzw. x_max und x_min, so wird die Soll-Fahrgeschwindigkeit v_soll des Traktors 10 bzw. Soll-Bearbeitungsgeschwindigkeit ẋ_soll des Bodenbearbeitungsgeräts 14 entsprechend der jeweiligen Randbedingung begrenzt. Hierbei wird durch das Signal S_anti_wind_up sichergestellt, dass d_soll-rück durch den Regler 86 im Falle des Erreichens des Minimums nicht weiter verringert bzw. im Fall des Erreichens des Maximums nicht weiter erhöht wird.

Wie bereits erwähnt, sendet die Datenverarbeitungseinheit 80 bei festgestellten Staubverhältnissen ein Einfriersignal S_fr an das Optimierungsmodul 76 (siehe Fig. 3). Genauer gesagt wird von der Datenverarbeitungseinheit 80 an die Vorsteuerung 84 ein Einfriersignal S_fr-vor gesendet, wenn Staubverhältnisse im Bereich der Feldoberfläche 18 vor der Bodenbearbeitung festgestellt werden, insbesondere auf Basis der vorausschauenden Sensormittel 58. Hierdurch wird die Vorsteuerung 84 deaktiviert. Die Voraus-Komponente d_soll-vor wird dann nicht weiter verändert bzw. modifiziert. Nach erneuter Aktivierung der Vorsteuerung 84 (z.B. durch Beenden des Einfriersignals S_fr-vor) kann die Voraus-Komponente d_soll-vor wieder verändert bzw. modifiziert werden.

An den Regler 86 wird von der Datenverarbeitungseinheit 80 ein Einfriersignal S_fr-rück gesendet, wenn Staubverhältnisse im Bereich der Feldoberfläche 18 nach der Bodenbearbeitung festgestellt werden, insbesondere auf Basis der zurückschauenden Sensormittel 60. Die Rück-Komponente d_soll-rück wird dann nicht weiter verändert bzw. modifiziert. Nach erneuter Aktivierung des Reglers 86 (z.B. durch Beenden des Einfriersignals S_fr-rück) kann die Rück-Komponente d_soll-rück wieder verändert bzw. modifiziert werden.

## Patentansprüche

1. Verfahren zur Automatisierung einer landwirtschaftlichen Arbeitsaufgabe, die von einem Bodenbearbeitungsgerät (14) an einem landwirtschaftlichen Traktor (10) ausgeführt wird, wobei
- von einer Kontrolleinheit (28) mindestens eine einen Arbeits- und/oder Betriebsparameter des Bodenbearbeitungsgerätes (14) repräsentierende Prozessführungsgröße (d_soll, ẋ_soll) durch Rückkopplungsdaten (MW) modifiziert wird, welche einen Feldzustand einer Feldoberfläche (18) vor und/oder nach der Bodenbearbeitung repräsentieren,
- für die Ermittlung zumindest eines Teils der Rückkopplungsdaten (MW) Bodenbilder (BD) der Feldoberfläche (18) durch Sensormittel (58, 60) generiert und von einer Datenverarbeitungseinheit (80) ausgewertet werden,
**dadurch gekennzeichnet, dass**
die Datenverarbeitungseinheit (80) die Bodenbilder (BD) derart auswertet, dass die Bodenbilder (BD) in Abhängigkeit des Ergebnisses einer Überwachung der Feldoberfläche (18) hinsichtlich eines optisch abdeckenden Luftstaubes (82) zur Ermittlung der Rückkopplungsdaten (MW) verwendet werden.

2. Verfahren nach Anspruch 1, **dadurch gekennzeichnet, dass** das Bodenbild (58, 60) nur dann zur Ermittlung der Rücckopplungsdaten (MW) verwendet wird, wenn das Überwachungsergebnis keinen Luftstaub (82) oder Luftstaub (82) bis höchstens zu einem vorbestimmten Staub-Schwellenwert (SW) repräsentiert.

3. Verfahren nach Anspruch 1 oder 2, **dadurch gekennzeichnet, dass** bei der Auswertung der Bodenbilder (BD) eine Bildsegmentierung mit einer Zuordnung von Bildpixeln zu einzelnen bereitgestellten Zustandsklassen (K1, K2, K3, K_b) erfolgt, welche unterschiedliche Feldzustände repräsentieren.

4. Verfahren nach einem der vorhergehenden Ansprüche,
**dadurch gekennzeichnet, dass** zur Überwachung hinsichtlich des Luftstaubes (82) eine als eine Staubklasse (K_st) wirksame Zustandsklasse für die Zuordnung des Luftstaubes (82) bereitgestellt wird.

5. Verfahren nach Anspruch 4, **dadurch gekennzeichnet, dass** das Bodenbild (BD) nur dann zur Ermittlung der Rückkopplungsdaten (MW) verwendet wird, wenn eine innerhalb des Bodenbildes (BD) festgestellte Häufigkeit (H_st) der der Staubklasse (K_st) zugeordneten Bildpixel höchstens so groß ist wie der vorbestimmte Staub-Schwellenwert (SW).

6. Verfahren nach einem der Ansprüche 3 bis 5, **dadurch gekennzeichnet, dass** die Rückkopplungsdaten auf Basis eines Zustands-Mittelwertes (MW) ermittelt werden, welcher in Abhängigkeit von den innerhalb des Bodenbildes festgestellten Häufigkeiten (H1, H2, H3) der zugeordneten Zustandsklassen (K1, K2, K3) gebildet wird.

7. Verfahren nach Anspruch 6, **dadurch gekennzeichnet, dass** der Zustands-Mittelwert (MW) unter Ausschluss der festgestellten Häufigkeit (H_st) der Staubklasse (K_st) gebildet wird.

8. Verfahren nach einem der vorhergehenden Ansprüche, **dadurch gekennzeichnet, dass** die Bodenbilder (BD) generiert werden und/oder die Feldoberfläche (18) hinsichtlich des Luftstaubes (82) überwacht wird durch
- vorausschauende Sensormittel (58) vor der Bodenbearbeitung, und/oder
- zurückschauende Sensormittel (60) nach der Bodenbearbeitung.

9. Verfahren nach einem der vorhergehenden Ansprüche, **dadurch gekennzeichnet, dass** der Feldzustand ein Bodenbedeckungsgrad (BG_ist-vor, BG_ist-rück) ist.

10. Verfahren nach einem der vorhergehenden Ansprüche, **dadurch gekennzeichnet, dass** von der Kontrolleinheit (28)
- über ein Interfacemodul (74) ein oder mehrere teilflächenspezifische Zielwerte (BG_ziel) und/oder Wichtungsfaktoren hinsichtlich prozessbezogener und/oder agronomischer Gütekriterien vorgegeben werden, nach deren Maßgabe die landwirtschaftliche Arbeitsaufgabe auszuführen ist,
- in einem Optimierungsmodul (76) die Zielwerte (BG_ziel) und/oder Wichtungsfaktoren in die mindestens eine Prozessführungsgröße (d_soll, x_soll) umgewandelt werden, wobei die Rückkopplungsdaten (MW) in das Optimierungsmodul (76) zur Modifizierung der mindestens einen Prozessführungsgröße (d_soll, ẋ_soll) eingehen, und
- einem Stabilisierungsmodul (78) die mindestens eine modifizierte Prozessführungsgröße (d_soll, x_soll) zur Ansteuerung einer Stell- und/oder Betriebseinrichtung (32, 50) des Bodenbearbeitungsgeräts (14) und/oder des landwirtschaftlichen Traktors (10) zugeführt wird.

11. Verfahren nach Anspruch 10, **dadurch gekennzeichnet, dass** zur Modifizierung der Prozessführungsgröße (d_soll) die Rückkopplungsdaten (MW)
- eines Feldzustands (BG_ist-vor) vor der Bodenbearbeitung im Optimierungsmodul (76) mittels einer auf einem Kennfeld (KF) basierenden Vorsteuerung (84) zu einer Voraus-Komponente (d_soll-vor) der Prozessführungsgröße (d_soll), und/oder
- eines Feldzustands (BG_ist-rück) nach der Bodenbearbeitung im Optimierungsmodul (76) mittels eines Reglers (86) zu einer Rück-Komponente (d_soll-rück) der Prozessführungsgröße (d_soll) verarbeitet werden.

12. Verfahren nach Anspruch 11, **dadurch gekennzeichnet, dass** im Optimierungsmodul (76)
- eine Gesamtkomponente (d_soll-ges) der Prozessführungsgröße (d_soll) durch die Rück-Komponente (d_soll-rück) oder in Abhängigkeit von einer Verknüpfung der Voraus-Komponente (d_soll-vor) mit der Rück-Komponente (d_soll-rück) gebildet wird,
- die Gesamtkomponente (d_soll-ges) der Prozessführungsgröße (d_soll) mit Randbedingungen (d_min, d_max) des Interfacemoduls (74) verglichen wird, und
- in Abhängigkeit des Vergleichsergebnisses eine weitere Prozessführungsgröße (x_soll) modifiziert wird.

13. Verfahren nach Anspruch 11 oder 12, **dadurch gekennzeichnet, dass** die Datenverarbeitungseinheit (80) in Abhängigkeit des Überwachungsergebnisses hinsichtlich Luftstaub (82) ein Einfriersignal (S_fr, S_fr-vor, S_fr-rück) an das Optimierungsmodul (76) zur Deaktivierung der Vorsteuerung (84) und/oder des Reglers (86) sendet.

## Claims

1. Method for automating an agricultural work task which is performed by a tillage device (14) on an agricultural tractor (10), wherein
- at least one process control variable (d_soll, x_soll) representing a working and/or operating parameter of the tillage device (14) is modified by a control unit (28) using feedback data (MW) which represent a field state of a field surface (18) before and/or after tillage,
- ground images (BD) of the field surface (18) are generated by sensor means (58, 60) and are evaluated by a data processing unit (80) in order to determine at least some of the feedback data (MW),
**characterized in that**
the data processing unit (80) evaluates the ground images (BD) in such a way that the ground images (BD) are used to determine the feedback data (MW) depending on the result of a monitoring of the field surface (18) for visually covering air dust (82).

2. Method according to Claim 1, **characterized in that** the ground image (58, 60) is used to determine the feedback data (MW) only if the monitoring result represents no air dust (82) or air dust (82) at most up to a predetermined dust threshold value (SW).

3. Method according to Claim 1 or 2, **characterized in that** an image segmentation with an assignment of image pixels to individual provided state classes (K1, K2, K3, K_b) representing different field states is performed in the evaluation of the ground images (BD).

4. Method according to one of the preceding claims, **characterized in that** a state class acting as a dust class (K_st) for the assignment of the air dust (82) is provided for the monitoring for air dust (82).

5. Method according to Claim 4, **characterized in that** the ground image (BD) is used to determine the feedback data (MW) only if a frequency (H_st) of the image pixels assigned to the dust class (K_st) identified within the ground image (BD) is at most as high as the predetermined dust threshold value (SW).

6. Method according to one of Claims 3 to 5, **characterized in that** the feedback data are determined on the basis of a state mean value (MW) which is formed depending on the frequencies (H1, H2, H3) of the assigned state classes (K1, K2, K3) identified within the ground image.

7. Method according to Claim 6, **characterized in that** the state mean value (MW) is formed excluding the identified frequency (H_st) of the dust class (K_st).

8. Method according to one of the preceding claims, **characterized in that** the ground images (BD) are generated and/or the field surface (18) is monitored for air dust (82) by
- forward-facing sensor means (58) before tillage, and/or
- backward-facing sensor means (60) after tillage.

9. Method according to one of the preceding claims, **characterized in that** the field state is a degree of ground covering (BG_ist-vor, BG_ist-rück).

10. Method according to one of the preceding claims, **characterized in that**, by the control unit (28),
- one or more partial-area-specific target values (BG_ziel) and/or weighting factors for process-related and/or agronomic quality criteria according to which the agricultural work task is to be performed are predefined via an interface module (74),
- the target values (BG_ziel) and/or weighting factors are converted in an optimization module (76) into the at least one process control variable (d_soll, X_soll), wherein the feedback data (MW) are incorporated into the optimization module (76) in order to modify the at least one process control variable (d_soll, ẋ_soll), and
- the at least one modified process control variable (d_soll, x_soll) is fed to a stabilization module (78) in order to control an adjusting and/or operating facility (32, 50) of the tillage device (14) and/or of the agricultural tractor (10).

11. Method according to Claim 10, **characterized in that**, in order to modify the process control variable (d_soll), the feedback data (MW)
- of a field state (BG_ist-vor) before tillage are processed in the optimization module (76) by means of a precontrol (84) based on a characteristic diagram (KF) to provide a forward component (d_soll-vor) of the process control variable (d_soll), and/or
- of a field state (BG_ist-rück) after tillage are processed in the optimization module (76) by means of a controller (86) to provide a back component (d_soll-rück) of the process control variable (d _soll).

12. Method according to Claim 11, **characterized in that**, in the optimization module (76):
- a total component (d_soll-ges) of the process control variable (d_soll) is formed by the back component (d_soll-rück) or depending on a linking of the forward component (d_soll-vor) with the back component (d_soll-rück),
- the total component (d_soll-ges) of the process control variable (d_soll) is compared with boundary conditions (d_min, d_max) of the interface module (74), and,
- a further process control variable (x_soll) is modified depending on the comparison result.

13. Method according to Claim 11 or 12, **characterized in that** the data processing unit (80) transmits a freeze signal (S_fr, S_fr-vor, S_fr-rück) to the optimization module (76) in order to deactivate the precontrol (84) and/or the controller (86) depending on the result of the monitoring for air dust (82).

## Revendications

1. Procédé d'automatisation d'une tâche de travail agricole qui est effectuée par un appareil de traitement de sol (14) situé sur un tracteur agricole (10),
- des grandeurs de guidage de processus (d_soll, x_soll) qui représentent un paramètre de travail et/ou de fonctionnement de l'appareil de traitement de sol (14) étant modifiée par une unité de commande (28) par le biais de données de rétroaction (MW) qui représentent un état de champ d'une surface de champ (18) avant et/ou après le traitement de sol,
- pour déterminer au moins une partie des données de rétroaction (MW), des images de sol (BD) de la surface de champ (18) étant générées par des moyens de détection (58, 60) et évaluées par une unité de traitement de données (80),
**caractérisé en ce que**
l'unité de traitement de données (80) évalue les images de sol (BD) de manière à ce que les images de sol (BD) soient utilisées pour déterminer les données de rétroaction (MW) en fonction du résultat de la surveillance de la surface de champ (18) en termes de poussières en suspension dans l'air (82) à recouvrement optique.

2. Procédé selon la revendication 1, **caractérisé en ce que** l'image de sol (58, 60) n'est utilisée pour déterminer les données de rétroaction (MW) que si le résultat de la surveillance ne représente aucune poussières en suspension dans l'air (82) ou représente des poussières en suspension dans l'air (82) jusqu'à une valeur seuil de poussières (SW) prédéterminée au plus.

3. Procédé selon la revendication 1 ou 2, **caractérisé en ce que**, lors de l'évaluation des images de sol (BD), une segmentation d'image est effectuée avec une association de pixels d'image à des classes d'état individuelles fournies (K1, K2, K3, K_b) qui représentent différents états de champ.

4. Procédé selon l'une des revendications précédentes, **caractérisé en ce que**, pour effectuer la surveillance en termes de poussières en suspension dans l'air (82), une classe d'état efficace comme classe de poussières (K_st) est fournie pour l'association des poussières en suspension dans l'air (82).

5. Procédé selon la revendication 4, **caractérisé en ce que** l'image de sol (BD) n'est utilisée pour déterminer les données de rétroaction (MW) que si une fréquence (H_st), déterminée dans l'image de sol (BD), des pixels d'image associés à la classe de poussières (K_st) est au plus aussi grande que la valeur seuil de poussière prédéterminée (SW).

6. Procédé selon l'une des revendications 3 à 5, **caractérisé en ce que** les données de rétroaction sont déterminées sur la base d'une valeur moyenne d'état (MW) qui est formée en fonction de fréquences (Hl, H2, H3), déterminées dans l'image de sol, des classes d'état associées (K1, K2, K3).

7. Procédé selon la revendication 6, **caractérisé en ce que** la valeur moyenne d'état (MW) est formée avec exclusion de la fréquence déterminée (H_st) de la classe de poussières (K_st).

8. Procédé selon l'une des revendications précédentes, **caractérisé en ce que** les images de sol (BD) sont générées et/ou la surface de champ (18) est surveillée en termes de poussières en suspension dans l'air (82) par
- des moyens de détection prédictifs (58) avant le travail de sol, et/ou
- des moyens de détection rétrospectifs (60) après le travail de sol.

9. Procédé selon l'une des revendications précédentes, **caractérisé en ce que** l'état de champ est un degré de couverture de sol (BG_ist-vor, BG_ist-rück) .

10. Procédé selon l'une des revendications précédentes, **caractérisé en ce que** l'unité de commande (28)
- spécifie une ou plusieurs valeurs cibles (BG_ziel) et/ou un ou plusieurs facteurs de pondération, qui sont spécifiques d'une partie de surface, par le biais d'un module d'interface (74) selon des critères de qualité liés au processus et/ou agronomiques selon lesquels la tâche de travail agricole doit être réalisée,
- convertit dans un module d'optimisation (76) les valeurs cibles (BG_ziel) et/ou les facteurs de pondération en au moins une grandeur de guidage de processus (d_soll, x_soll), les données de rétroaction (MW) entrant dans le module d'optimisation (76) pour modifier l'au moins une grandeur de guidage de processus (d_soll, x_soll), et
- amène à un module de stabilisation (78) l'au moins une grandeur de guidage de processus modifiée (d_soll, x_soll) pour commander un dispositif d'actionnement et/ou de fonctionnement (32, 50) de l'appareil de traitement de sol (14) et/ou du tracteur agricole (10).

11. Procédé selon la revendication 10, **caractérisé en ce que**, pour modifier la grandeur de guidage de processus (d_soll),
- les données de rétroaction (MW) d'un état de champ (BG_ist-vor) avant le traitement de sol sont traitées dans le module d'optimisation (76) au moyen d'une précommande (84) basée sur un diagramme caractéristique (KF) pour obtenir une composante d'avance (d_soll-vor) de la grandeur de guidage de processus (d_soll), et/ou
- les données de rétroaction (MW) d'un état de champ (BG_ist-rück) après le traitement de sol sont traitées dans le module d'optimisation (76) au moyen d'un régulateur (86) pour obtenir une composante de rétroaction (d_soll-rück) de la grandeur de guidage de processus (d_soll).

12. Procédé selon la revendication 11, **caractérisé en ce que** dans le module d'optimisation (76)
- une composante globale (d_soll-ges) de la grandeur de guidage de processus (d_soll) est formée par la composante de rétroaction (d_soll-rück) ou en fonction d'une combinaison de la composante d'avance (d_soll-vor) avec la composante de rétroaction (d_soll-rück),
- la composante globale (d_soll-ges) de la grandeur de guidage de processus (d_soll) est comparée à des conditions limites (d_min, d_max) du module d'interface (74), et
- une autre grandeur de guidage de processus (x _soll) est modifiée en fonction du résultat de la comparaison.

13. Procédé selon la revendication 11 ou 12, **caractérisé en ce que** l'unité de traitement de données (80) envoie un signal de gel (S_fr, S_fr-vor, S_fr-rück) au module d'optimisation (76) pour désactiver la précommande (84) et/ou le régulateur (86) en fonction du résultat de surveillance en termes de poussières en suspension dans l'air.
